# EUROPEAN PATENT APPLICATION

(11) **EP 4 808 041 A1**
(43) Date of publication of application: **16.09.2026**
(21) Application number: 26164324.1
(22) Date of filing: 12.03.2026
(51) Int. Cl.: H04L 9/32, H04L 9/40

(54) **MULTICONTEXT UNIQUE IDENTIFIER REGENERATION**

(30) Priority: 13.03.2025 IN 202511022602; 25.03.2025 US 202519089078
(71) Applicant: Microsoft Technology Licensing LLC, Redmond, WA 98052-6399 (US)
(72) Inventor: BHATNAGAR, Achindra, Redmond, 98052-6399 (US); BAGGA, Atul, Redmond, 98052-6399 (US)
(74) Representative: Page White Farrer

(57) **Abstract**

Regenerable items serve as identifiers or keys or both. A regenerable items tuple is generated by combining context-specific identifiers into a string, hashing the string, and designating individual hash portions as respective regenerable items. Regenerable items maintain artifact tracking continuity after a reinstall, a reboot, or another intervening event without retrieval of a previously generated value from a registry or state file. Some regenerable items conform to a universally unique identifier specification. Some regenerable items are free of reliance on nondeterministic content, and some are free of reliance on time-dependent content.

## Description

### RELATED APPLICATION

The present application claims priority to, and incorporates by reference the entirety of, India provisional patent application number 202511022602 filed 13 March 2025.

### BACKGROUND

Data artifacts are sometimes tagged or otherwise marked with an identifier to distinguish them from other data artifacts. In some scenarios, the marked artifacts differ only by the value of their respective identifiers, and in some other scenarios the other data artifacts also differ in other values but share an underlying structure or an underlying entity. Identifiers sometimes help answer the question of whether two copies of otherwise similar data correspond to the same artifact, or correspond to the same artifact owner, for an artifact such as a user account, a database table, a device, a computational service, etc.

Improvements in the generation of identifiers, and in how identifiers are used, remain possible.

### SUMMARY

Some embodiments address technical challenges arising from loss of identifiers due to intervening events such as reinstalls, reboots, and other events that corrupt, delete, or otherwise make an identifier unavailable. One challenge is how to improve tracking of a given artifact by making the same tracking identifier available to track the artifact both before and after the intervening event. Another challenge is how to target the identifier so it is valid only within specified contexts. Other technical challenges of identifier creation and use are also addressed herein.

One example embodiment executing in a computing system obtains a first context-specific identifier which is specific to a first context; obtains a second context-specific identifier which is specific to a second context which is different than the first context, each context specifying at least one of: a hardware device, a particular user account, a particular group of user accounts, a computational service, an application program, a location, a time, a virtual machine, or a container which is a software virtualization mechanism. This embodiment forms a string from at least the first context-specific identifier and the second context-specific identifier; computes a cryptographic hash of the string, the cryptographic hash having a first portion and a second portion; utilizes at least one of the first portion and the second portion as a key or as an identifier or both; and subsequently regenerates the cryptographic hash in the absence of any copy of the first portion and the absence of any copy of the second portion. The regenerating includes recomputing the cryptographic hash. The absence of a particular portion is absence of the particular portion from the computing system during the regenerating until the recomputing recomputes the particular portion.

Another example embodiment in a computing system includes a digital memory; a processor in operable communication with the digital memory; a combination procedure with instructions to form a string by combining a first context-specific identifier with a second context-specific identifier which is from a different context than the first context-specific identifier; a cryptographic hash procedure with instructions to compute a cryptographic hash of the string, the cryptographic hash procedure having a collision probability no greater than SHA-256 collision probability; a portioning procedure with instructions to designate a first portion of the cryptographic hash as a first regenerable item and designate a second portion of the cryptographic hash as a second regenerable item; and an interface to a regenerable item utilization procedure.

Additional technical activities, technical characteristics, and technical benefits pertinent to teachings herein will also become apparent to those of skill in the art. The examples given are merely illustrative. This Summary is not intended to identify key features or essential features of the claimed subject matter, nor is it intended to be used to limit the scope of the claimed subject matter. Rather, this Summary is provided to introduce - in a simplified form - some technical concepts that are further described below in the Detailed Description. Subject matter scope is defined with claims as properly understood, and to the extent this Summary conflicts with the claims, the claims should prevail.

### BRIEF DESCRIPTION OF THE DRAWINGS

A more particular description is given with reference to the attached drawings. These drawings only illustrate selected aspects and thus do not fully determine coverage or scope.
Figure 1 is a diagram illustrating aspects of computer systems, including some aspects generally suitable for enhanced systems which include or use multicontext unique identifier regeneration (MUIR) functionality;
Figure 2 is a block diagram illustrating aspects of a first example family of enhanced systems which are each configured with MUIR functionality;
Figure 3 is a dataflow diagram of a second example family of enhanced systems which are each configured with MUIR functionality;
Figure 4 is a block diagram illustrating aspects and examples related to context in a computing system;
Figure 5 is a block diagram illustrating aspects and examples related to identifier content;
Figure 6 is a block diagram illustrating additional aspects and examples related to MUIR functionality;
Figure 7 is a first flowchart illustrating some MUIR methods;
Figure 8 is a second flowchart illustrating some MUIR methods; and
Figure 9 is a third flowchart further illustrating MUIR methods, and incorporating as options the steps of each of Figure 7 and Figure 8, and other steps disclosed herein.

### DETAILED DESCRIPTION

### Overview

Some teachings described herein reflect technical challenges faced and insights gained during efforts to improve cybersecurity tools. However, the teachings herein are not limited in their scope or applicability to this particular kind of software, or to these particular challenges, solutions, or insights, or to the particular application fields used as examples.

Software reinstalls, device power cycling, reboots, and various other events put identifiers and keys at risk of corruption or deletion. For example, uninstalling and reinstalling a piece of software P raises the question of how to recover the value of an identifier that is associated with P, e.g., an identifier designed to be used to distinguish different instances of P from one another or to identify artifacts belonging to P. A first approach saves the identifier in a state file that is specific to P, to allow retrieval of P during the reinstall. However, such state files are not necessarily recognized by software other than P, so the identifier is not protected against being corrupted or deleted after the uninstall and before the reinstall. A second approach saves a copy of the identifier in a registry or another kernel-recognized state file. However, this consumes limited kernel-managed space, and risks leaving the identifier in the kernel-managed space as wasteful clutter if P is not reinstalled. A third approach creates a value for the identifier each time P is installed. However, this breaks the continuity of any audit because P gets associated with different values across multiple installs.

Some embodiments described herein take a different approach, referred to here as multicontext unique identifier regeneration (MUIR). These embodiments utilize or provide identifiers which are deterministically regenerated with the same value after an intervening event, e.g., during each operating system installation or after memory is corrupted by cycling electric power to a device. Instead of storing the identifier's value in a registry or a vulnerable state file and then attempting to retrieve the stored value, these embodiments generate or regenerate the same value on demand.

In some MUIR embodiments, a computing system performs a method which includes: obtaining a first context-specific identifier which is specific to a first context; obtaining a second context-specific identifier which is specific to a second context, the second context being different than the first context (e.g., nonoverlapping), each context specifying at least one of: a hardware device, a particular user account, a particular group of user accounts, a computational service, an application program, a location, a time, a virtual machine, or a container which is a software virtualization mechanism; forming a string from at least the first context-specific identifier and the second context-specific identifier; computing a cryptographic hash of the string, the cryptographic hash having a first portion and a second portion; utilizing at least one of the first portion and the second portion as a key or as an identifier or both; and regenerating the cryptographic hash in the absence of any copy of the first portion and the absence of any copy of the second portion, the regenerating including recomputing the cryptographic hash, the absence of a particular portion being absence of the particular portion from the computing system during the regenerating until the recomputing recomputes the particular portion.

This MUIR functionality has a technical benefit of improving efficiency by enhancing tracking continuity. Logs, audits, and other tracking mechanisms and tools will have the same value for the computed hash, and hence for its portions, despite any intervening events such as a reboot or a reinstall which pose a risk of corruption or loss of the values in an application-created state file. Regeneration also beneficially respects registry size limits better than registry storage-and-retrieval, because the first portion and the second portion values are regenerated instead of being stored in the registry for possible later retrieval. Enhanced scalability is another technical benefit, because an arbitrarily large number of different instances of a piece of software or different instances of an artifact need not rely on a central registry but are able instead to each get, through (re)generation, their own respective copy of the first portion and/or the second portion of the computed hash.

In some MUIR embodiments, each of the first context-specific identifier and the second context-specific identifier is free of random content, pseudo-random content, and any other nondeterministic content. This MUIR functionality has a technical benefit of enhancing tracking continuity by helping ensure the same value is obtained from the regeneration; the regeneration is deterministic instead of being dependent on a random seed. Another technical benefit is improved portability of the code that provides the MUIR identifier or the MUIR key, and reduced size of that code, as a result of avoiding use of a random number generator library.

In some MUIR embodiments, the method includes conforming the cryptographic hash to a specification of a name-based universally unique identifier by altering at least one bit of the computed cryptographic hash. For example, in some cases the hash is altered to conform with the Internet Engineering Task Force Request for Comments 4122 (RFC 4122) specification of a universally unique identifier (UUID) based on a name 516, also known as a version 5 UUID 308, or to conform with a subsequent specification such as RFC 9562. For enhanced security, these embodiments do not rely on SHA-1 hashing as taught in RFC 4122, but instead perform SHA-2 or another hashing which is unbroken (SHA-2 is unbroken at the time of this writing). As a result, technical benefits include both compatibility with RFC UUID size constraints and enhanced security through reduced 948 collision probability relative to SHA-1-based hash computation.

In some MUIR embodiments, a first regenerable item and a second regenerable item are each at least sixteen bytes long, the cryptographic hash procedure has a collision probability no greater than SHA-256 collision probability, and the method further includes satisfying at least one of: the utilizing utilizes the first regenerable item as a symmetric encryption key; the first context includes a specification of a hardware device, and the utilizing utilizes the first regenerable item as a key which is specific to the hardware device; the first context includes a specification of a particular user account, and the utilizing utilizes the first regenerable item as a key which is specific to the particular user account; the first context includes a specification of a particular group of user accounts, and the utilizing utilizes the first regenerable item as a key which is specific to the particular group of user accounts; the first context includes a specification of a geographic location, and the utilizing utilizes the first regenerable item as a key which is specific to the geographic location; or the computing system includes a context which includes a specification of a time, the first context includes a specification of a time period, and the utilizing utilizes the first regenerable item as a key which is specific to the time period.

This MUIR functionality has a technical benefit of enhancing security by targeting the regenerable items to particular utilization contexts. The regenerable items are the first portion and the second portion of the computed cryptographic hash. In some cases, either or both portions have also been altered to conform with RFC 4122. The regenerable items are targeted (i.e., focused) by their dependence on the particular utilization contexts of the input context-specific identifiers which are hashed when generating the regenerable items. For example, when the first context includes a specification of a hardware device, the utilizing utilizes the first regenerable item as a key which is specific to the hardware device. Gatekeeper software is able to authenticate an attempted use of the key by regenerating the key with the hardware device identifier and comparing the regeneration result to the key offered in the attempt. Similarly, gatekeeper software is able to authenticate an attempted use of a key that targets a geographic location, or a key that targets a particular time period, by comparing regenerated values to offered values; no match with the offered value results in denial of the attempted utilization sought with the offered value.

In some MUIR embodiments, a regenerable item utilization procedure includes instructions which upon execution by the processor perform at least one of the following with at least one of the regenerable items (i.e., with at least one of the computed hash portions): forensic analysis, intrusion detection, anomaly detection, encryption, decryption, computing system event auditing, computing system data auditing, or data tracking continuity.

This MUIR functionality has a technical benefit of enhancing security through efficient correlation of artifact identifiers by continuity of regenerable items across intervening events during security operations such as forensic analysis, intrusion or anomaly detection, decryption, and auditing. This MUIR functionality also enhances efficiency by reducing or removing computation that would otherwise be spent on more than a simple comparison of values to determine whether two different key values or two different identifier values correspond to the same artifact on opposite sides of an intervening event.

In some MUIR embodiments and scenarios, an intervening event occurs in an environment that contains or communicates with a MUIR-equipped computing system, the intervening event occurs between computing the cryptographic hash and regenerating the cryptographic hash, and the intervening event includes at least one of: uninstalling a service which is identified by the first portion; uninstalling an application program which is identified by the first portion; creating a replica of a service which is identified by the first portion; cloning a software virtualization mechanism which is identified by the first portion; cloning a piece of software which is identified by the first portion; or replacing a version of an item in an immutable infrastructure which stores the first portion. This MUIR functionality has a technical benefit of enhancing security and efficiency through continuity of regenerable items across one or more the listed intervening events.

These and other advantages and benefits will be apparent to one of skill from the teachings provided herein.

### Operating Environments

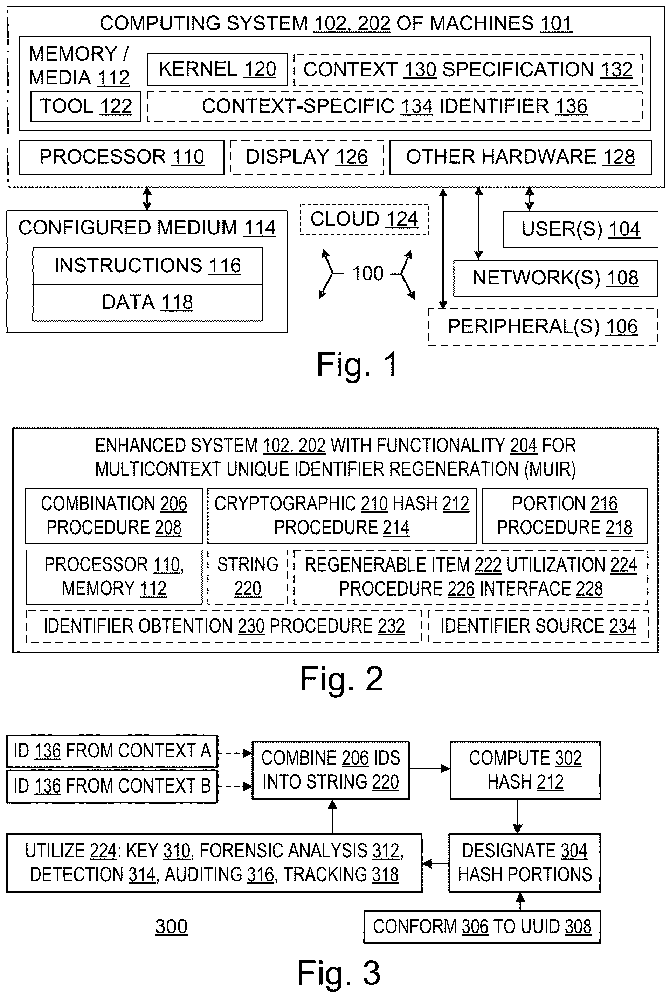

With reference to Figure 1, an operating environment 100 for an example embodiment includes at least one computer system 102. The computer system 102 may be a multiprocessor computer system, or not. An operating environment may include one or more electrically-powered machines 101 in a given computer system, which may be clustered, client-server networked, and/or peer-to-peer networked within a cloud 124. An individual machine 101 which includes a processor 110 and a digital memory 112 is a computer system, and a network or other non-empty cooperating group of such machines 101 is also a computer system. A given computer system 102 may be configured for end-users, e.g., with applications, for administrators, as a server, as a distributed processing node, and/or in other ways.

System administrators, network administrators, cloud administrators, security analysts and other security personnel, operations personnel, developers, testers, engineers, auditors, and end-users are each a particular type of human user 104. Human users 104 sometimes interact with a computer system 102 user interface by using displays 126, keyboards 106, and other peripherals 106, via typed text, touch, voice, movement, computer vision, gestures, and/or other forms of I/O (input/output). Virtual reality or augmented reality or both functionalities are provided by a system 102 in some embodiments. A screen 126 is a removable peripheral 106 in some embodiments and is an integral part of the system 102 in some embodiments. The user interface supports interaction between an embodiment and one or more human users. In some embodiments, the user interface includes one or more of: a command line interface, a graphical user interface (GUI), natural user interface (NUI), voice command interface, or other user interface (UI) presentations, presented as distinct options or integrated.

Storage devices or networking devices or both are considered peripheral equipment 106 in some embodiments and integral parts of a system 102 in other embodiments, depending on their physical detachability from an electrical connection to the processor 110 hardware. In some embodiments, other computer systems not shown in Figure 1 interact in technological ways with the computer system 102 or with another system embodiment using one or more connections to a cloud 124 and/or other network 108 via network interface equipment, for example.

Each computer system 102 includes at least one processor 110. The computer system 102, like other suitable systems, also includes one or more computer-readable storage media 112, also referred to as computer-readable storage devices 112. In some embodiments, tools 122 include security tools or software applications, editors, compilers, debuggers and other software development tools, document processing tools, as well as APIs, browsers, or webpages and the corresponding software for protocols such as HTTPS. Files, APIs, endpoints, and other resources may be accessed by an account or non-empty set of accounts, user or non-empty group of users, IP address or non-empty group of IP addresses, or other computational entity.

Storage media 112 occurs in different physical types. Some examples of storage media 112 are volatile memory, nonvolatile memory, fixed in place media, removable media, magnetic media, optical media, solid-state media, and other types of physical durable storage media (as opposed to merely a propagated signal or mere energy). In particular, in some embodiments a configured storage medium 114 such as a portable (i.e., external) hard drive, CD, DVD, memory stick, or other removable nonvolatile memory medium becomes functionally a technological part of the computer system 102 when inserted or otherwise installed, making its content accessible for interaction with and use by processor 110. The removable configured storage medium 114 is an example of a computer-readable storage medium 112. Some other examples of computer-readable storage media 112 include built-in RAM, ROM, hard disks (solid state or magnetic or optical), and other memory storage devices which are not readily removable by users 104. For compliance with current United States patent requirements, neither a computer-readable medium nor a computer-readable storage medium nor a computer-readable memory nor a computer-readable storage device is a signal per se or mere energy under any claim pending or granted in the United States.

A storage device 114 is sometimes configured with binary instructions 116 that are executable by a processor 110; "executable" is used in a broad sense herein to include machine code, interpretable code, and/or code that runs on a virtual machine, for example. The storage medium 114 is also configured with data 118 which is created, modified, referenced, and/or otherwise used for technical effect by execution of the instructions 116. The instructions 116 and the data 118 configure the memory or other storage medium 114 in which they reside; when that memory or other computer readable storage medium is a functional part of a given computer system, the instructions 116 and data 118 also configure that computer system. In some embodiments, a portion of the data 118 is representative of real-world items such as events manifested in the system 102 hardware, physical measurements, sensor data, and so forth.

Although an embodiment may include software instructions executed by one or more processors in a computing device, such description is not meant to exhaust all possible embodiments. Embodiments do not necessarily include any software. One of skill will understand that the same or similar functionality of software can often be implemented, in whole or in part, directly in hardware logic, to provide the same or similar technical effects. Alternatively, or in addition to a software implementation, technical functionality can be performed, in some examples, by one or more hardware logic components. For example, and without excluding other implementations, some embodiments include one or more of: chiplets, hardware logic components 110, 128 such as Field-Programmable Gate Arrays (FPGAs), Application-Specific Integrated Circuits (ASICs), Application-Specific Standard Products (ASSPs), System-on-a-Chip (SoC) components, Complex Programmable Logic Devices (CPLDs), and similar components. In some embodiments, components are grouped into interacting functional modules based on their inputs, outputs, or their technical effects, for example.

In addition to processors 110 (e.g., CPUs, ALUs, FPUs, TPUs, GPUs, and/or quantum processors), memory / storage media 112, peripherals 106, and displays 126, some operating environments also include other hardware 128, such as batteries, buses, power supplies, wired and wireless network interface cards, for instance. The nouns "screen" and "display" are used interchangeably herein. In some embodiments, a display 126 includes one or more touch screens, screens responsive to input from a pen or tablet, or screens which operate solely for output. In some embodiments, peripherals 106 such as human user I/O devices (screen, keyboard, mouse, tablet, microphone, speaker, motion sensor, etc.) are present in operable communication with one or more processors 110 and memory 112.

In some embodiments or operating environments, a system includes multiple computers connected by a wired and/or wireless network 108. Networking interface equipment 128 provides access to networks 108, using network components such as a packet-switched network interface card, a wireless transceiver, or a telephone network interface, for example, which are present in some computer systems. In some, virtualizations of networking interface equipment and other network components such as switches or routers or firewalls are also present, e.g., in a software-defined network or a sandboxed or other secure cloud computing environment. In some embodiments or operating environments, one or more computers are partially or fully "air gapped" by reason of being disconnected from, or only intermittently connected to, another networked device or remote cloud or the internet. Some examples also communicate technical data or technical instructions or both through direct memory access, removable or non-removable volatile or nonvolatile storage media, or other information storage-retrieval and/or transmission approaches.

One of skill will appreciate that the foregoing aspects and other aspects presented herein under "Operating Environments" form part of some example embodiments, but are not required in every embodiment. This document's headings do not provide a strict classification of features into embodiment and non-embodiment feature sets.

One or more items are shown in outline form in the Figures, or listed inside parentheses, to emphasize that they are not necessarily part of the illustrated operating environment or all embodiments, but interoperate with items in an operating environment or some embodiments as discussed herein. It does not follow that any items which are not in outline or parenthetical form are necessarily required, in any Figure or any embodiment. In particular, Figure 1 is provided for convenience; inclusion of an item in Figure 1 does not imply that the item, or the described use of the item, was known prior to the current disclosure.

In any later application that claims priority to the current application, reference numerals may be properly added to designate items disclosed in the current application. Such items may include, e.g., software, hardware, steps, processes, systems, functionalities, mechanisms, connections, devices, data structures, kinds of data, settings, parameters, components, computational resources, workflows, or algorithm implementations, or other items in a computing environment, which are disclosed herein but not tied to a particular reference numeral. Corresponding drawings may also be properly added.

### More About MUIR Systems

Specific items called out in the figures are discussed at various points herein. Figure 2 illustrates a computing system 102 or other system configured by one or more of the MUIR functionality enhancements taught herein, resulting in an enhanced system 202. In some embodiments, an enhanced system 202 includes a single machine, a local network of machines, machines in a particular building, machines used by a particular entity, machines in a particular datacenter, machines in a particular cloud, or another environment 100 that is suitably enhanced as taught herein.

Figure 3 is a dataflow diagram 300 of another example family of enhanced systems 202 which are each configured with MUIR functionality 204. In some embodiments consistent with Figure 3, components shown in Figure 2 or other figures are also present.

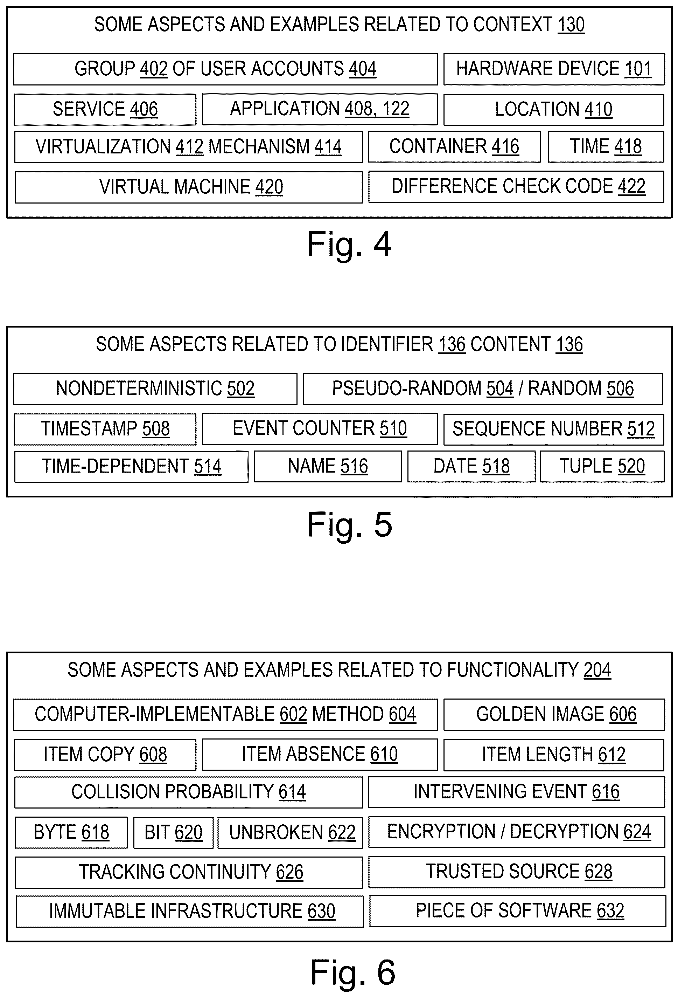

Figures 1-6 show reference numerals for some items and some aspects of items that relate to MUIR. Failure to receive a reference numeral does not make an item insignificant. Figures 1-6 do not individually or collectively or in any subset fully define a comprehensive summary of all aspects of enhanced systems 202 or all aspects of MUIR functionality 204. Nor is any figure of Figures 1-6 or any group of figures of Figures 1-6 by itself a comprehensive summary of all aspects of an environment 100 or another computational context of an enhanced system 202.

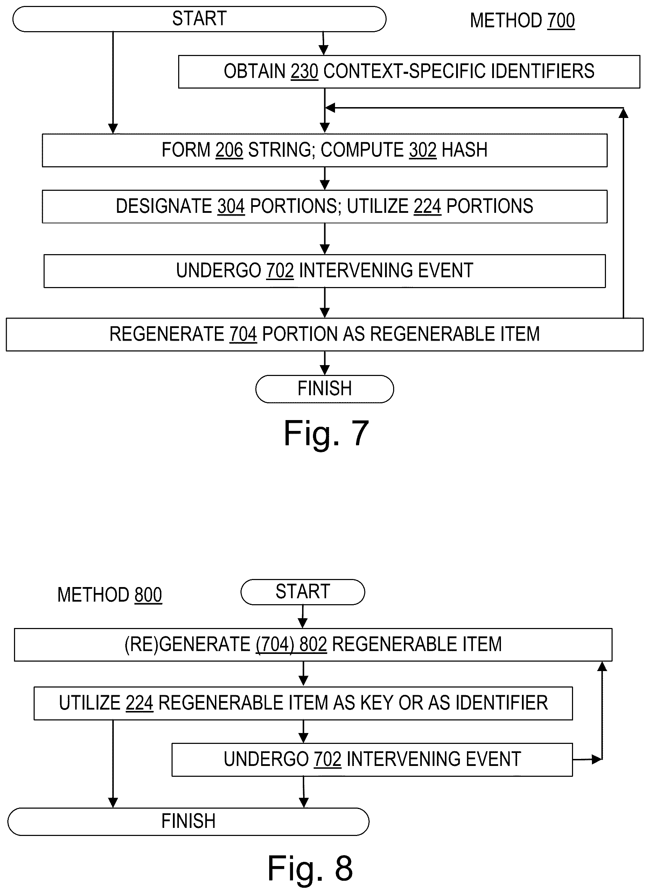

The other figures are also pertinent to systems 202. Figures 7 to 9 are flowcharts which illustrate some methods of MUIR functionality 204 operation in some systems 202.

In some embodiments, the enhanced system 202 is networked through an interface 228. In some, an interface 228 includes hardware such as network interface cards, software such as network stacks, APIs, or sockets, combination items such as network connections, or a combination thereof.

Some embodiments include a computing system 202 which is equipped, structured, or otherwise configured to utilize or provide MUIR functionality 204. The system 202 includes a digital memory set 112 including at least one digital memory 112, and a processor set 110 including at least one processor 110. The processor set is in operable communication with the digital memory set. A digital memory set is a set which includes at least one digital memory 112, also referred to as a memory 112. The word "digital" is used to emphasize that the memory 112 is part of a computing system 102, not a human person's memory. The word "set" is used to emphasize that the memory 112 is not necessarily in a single contiguous address block or of a single kind, e.g., a memory 112 may include hard drive memory as well as volatile RAM, and may include memories that are physically located on different machines 101, but "memory" alone also includes systems with multiple memories. Similarly, the phrase "processor set" is used to emphasize that a processor 110 is not necessarily confined to a single chip or a single machine 101, but "processor" alone also includes systems with multiple processors.

All sets herein are non-empty unless described otherwise. At a given point in time any data structure implementing a set identified in this description is empty, or is non-empty, depending on the embodiment and the circumstances. However, even an empty set is defined and detectable in the system 202 as a set when an embodiment includes a data structure implementing the set. The absence of members of a set is not the absence of the set itself.

In this example, a computing system 202 includes at least one processor 110, which is in operable communication with at least one digital memory 112. The at least one digital memory includes volatile storage and nonvolatile storage unless indicated otherwise.

Some embodiments include a computing system 202 including: a digital memory 112; a processor 110 in operable communication with the digital memory; a combination procedure 208 which includes instructions 116 which upon execution by the processor form a string 220 by combining 206 a first context-specific identifier 136 with a second context-specific identifier 136 which is from a different context 130 than the first context-specific identifier; a cryptographic 210 hash procedure 214 which includes instructions 116 which upon execution by the processor compute 302 a cryptographic hash 212 of the string, the cryptographic hash procedure having a collision probability 614 no greater than SHA-256 collision probability; a portioning procedure 218 which includes instructions 116 which upon execution by the processor designate 304 a first portion 216 of the cryptographic hash as a first regenerable item 222 and designate a second portion 216 of the cryptographic hash as a second regenerable item 222; and an interface 228 to a regenerable item utilization procedure 226.

A hash function is considered cryptographic 210 when it is designed to be one-way, meaning it is computationally infeasible to reverse the hashing process to obtain the original input data from its generated hash value.

In one approach, the collision probability P is approximated as (n * (n - 1)) / (2 * H), where n represents the number of items being hashed and H is the size of the hash space (the possible number of unique hash values). The larger the hash space, the lower the probability of a collision for a given number of items. The probability of a SHA-256 hash collision is considered extremely low, essentially 1 in 2^128 (2 to the 128^{th} power).

Some embodiments include an identifier obtention procedure 232 which includes instructions 116 which upon execution by the processor obtain 230 at least one context-specific identifier from a trusted source 628, 234. Some examples of a trusted source include the BIOS or UEFI code as a source 234 of a device identifier, an identity provider (e.g., Microsoft Entra^{™} software or Active Directory^{®} software, or similar; marks of Microsoft Corporation) as a source 234 of an account identifier or account group identifier, and a kernel or a container manager or a virtual machine manager as a source 234 of a service identifier, an application identifier, a virtual machine identifier, or a container identifier. Some embodiments use a disk serial number, a device MAC address, or an International Mobile Equipment Identity (IMEI) as a trusted identifier 136.

Some embodiments include the regenerable item utilization procedure 226, and the regenerable item utilization procedure includes instructions 116 which upon execution by the processor perform at least one of the following with computational usage of at least one of the regenerable items: forensic analysis 312, intrusion detection 314, anomaly detection 314, encryption 624, decryption 624, computing system event auditing 316, computing system data auditing 316, or data tracking continuity 626.

For example, forensic analysis 312 uses identifiers 136 to track software artifacts, such as digital traces left behind by software programs on a system. Tracking allows forensic tools and forensic investigators to identify which programs were installed, for example, when they were used, and in some cases to reconstruct actions taken within those programs, thus providing valuable evidence in security investigations.

An intrusion detection system (IDS) 314 can track software identifiers 136 as part of its monitoring process, particularly when operating as a host-based IDS, which allows it to analyze information about processes and applications running on a system, including their unique identifiers, in order to identify potentially malicious activity. By examining process identifiers, executable file names 516, and other attributes, an IDS can identify which software is running on a system and flag suspicious behavior associated with specific applications. Some IDS tools perform anomaly detection 314 by comparing the behavior of an application against its typical usage patterns and alerting if behavior deviates significantly, potentially indicating malicious activity.

Data tracking continuity is present when a data artifact's identity remains consistent, accessible, and usable over time across different systems and platforms. Such continuity allows information to be tracked and followed seamlessly throughout an artifact's lifecycle, even when transitioning between different applications or environments. Continuity 262 helps maintain the integrity and flow of data to support informed decision-making without interruption or data loss.

Computing system data auditing examines and evaluates data within a computer system to help ensure its accuracy, integrity, security, and compliance with established policies and regulations. Auditing reviews the controls and processes that manage the data throughout its lifecycle within the system.

Computing system event auditing records and monitors specified actions or events that occur within a computer system, such as user logins, file access, system restarts, or security changes. Event auditing tracks activity, helps detect potential security threats, and helps ensure compliance with regulations by creating a detailed log of computational events.

Computing system event auditing 316 and computing system data auditing 316 employ identifiers 136 to track events and data over time. Continuity 626 occurs when the same identifier pertains to a given item despite intervening events, e.g., a database table does not have identifier X before a reboot and then have a different identifier Y after the reboot, at least not as a side-effect of the reboot. Breaking continuity 626 by giving a device or other resource different identifiers instead of its own unique consistent identifier complicates or prevents tracking.

Breaking continuity also erroneously proliferates resource identifiers. In the case of a device, virtual machine, application instance, or other licensed resource, assigning a sequence of different identifiers to identify the same resource leads to spurious charges, premature exhaustion of instance limits, wasted computation, wasted storage, wasted bandwidth, and other problems that are avoidable by use of regenerable identifiers 222. For instance, in a testing scenario that utilizes non-regenerable items, running a test that is meant to add a particular single device ten thousand times with varied environmental parameter settings will actually add ten thousand devices, each with its own different identifier.

Some embodiments include the first context-specific identifier 136 and the second context-specific identifier 136, and each context specifies a respective one of: a hardware device 101, a particular user account 404, a particular group 402 of user accounts 404, a computational service 406, an application program 408, a location 410, a virtual machine 420, or a container 416 which is a software virtualization 412 mechanism 414.

Unless stated otherwise, contexts are presumed to be non-overlapping in their role as specific 134 context for an identifier 136. Accordingly, the entire computing environment 100 is not a solitary context 130 but is rather a collection of multiple contexts 130. Contexts are also presumed to be focused. Thus, an example of a hardware device specific context is a single hardware device; another example is a set or list of hardware devices. A list of hardware devices per se is not an application program context 130 because it lacks a focus on application programs, but a list of application programs installed on a specified set of hardware devices is an application program context 130. Likewise, a list of application programs installed on a specified set of virtual machines is an application program context 130.

Some embodiments include the first context-specific identifier 136 and the second context-specific identifier 136, and at least one of the following conditions is met: the first context-specific identifier is specific to a hardware device 101 and the second context-specific identifier is specific to a particular user account 404; the first context-specific identifier is specific to a hardware device 101 and the second context-specific identifier is specific to a particular group 402 of user accounts; the first context-specific identifier is specific to a virtual machine 420 and the second context-specific identifier is specific to a particular user account 404; or the first context-specific identifier is specific to a virtual machine 420 and the second context-specific identifier is specific to a particular group 402 of user accounts.

In some embodiments, a machine identifier includes a hardware serial number or a virtual machine identifier, for instance, and a user account identifier identifies a single user account or identifies a group of user accounts, e.g., a tenant. Some examples of a user account identifier include a Windows User Security ID (SID) and a Linux User ID (UID). An example of an identifier of a particular group of user accounts is a Windows Tenant ID (TID).

When a regenerable item is computationally derived from a context-specific identifier which is specific to a particular group 402 of user accounts, the regenerable item permits authentication of those users wherever they go, e.g., by supporting devices which are accessible to all these users.

In some embodiments, the combination procedure 208 includes instructions 116 which upon execution by the processor perform at least one of: concatenate 910 the first context-specific identifier with the second context-specific identifier; or interleave 912 the first context-specific identifier with the second context-specific identifier. As an example, consider a first identifier AB and a second identifier CD, where A, B, C, and D each represent a sequence of bits or bytes or characters or strings. Then ABCD and CDAB are each a concatenation 910 of the two identifiers, whereas ACBD, ACDB, CABD, and CADB are each an interleaving 912 of the two identifiers. Other combinations 206 of the two identifiers also exist, e.g., BADC, BACD, and so on.

In some embodiments, the cryptographic hash procedure 214 includes instructions 116 which upon execution by the processor perform an unbroken 622 cryptographic hash algorithm. An unbroken cryptographic hash algorithm is one that has not been shown publicly to have any significant vulnerabilities or weaknesses, so it is considered secure against known attacks. As of the time of writing, examples of unbroken cryptographic hash algorithms include SHA-256 and SHA-512 from the Secure Hash Algorithm family, and examples of broken cryptographic hash algorithms include MD5 (Message-Digest Algorithm 5) and SHA-1.

Some embodiments include instructions 422, 116 which upon execution by the processor check 914 whether particular identifiers are from a same context 130 as each other. For instance, a device identifier of a hardware device X and a device identifier of a different hardware device Y are from the same context, but a device identifier of a hardware device X and a virtual machine identifier are from different contexts (hardware device versus virtual machine).

### MUIR Processes (a.k.a. Methods)

Processes (which are also referred to as "methods" in the legal sense of that word) are illustrated in various ways herein, both in text and in drawing figures. Figures 7 to 9 each illustrate a family of MUIR methods 700, 800, and 900 respectively, which are performed or assisted by some enhanced systems, such as some systems 202 or another functionality enhanced system as taught herein. Method families 700 and 800 are each a proper subset of method family 900. Moreover, activities are identified in Figures 1 to 6 as explicit or implicit method steps are likewise incorporated into method 900, e.g., logging computational events, receiving data from a user interface, sending data to a user interface, invoking kernel routines, and so on. Also, steps that are not expressly tied herein to a particular reference number are not thereby excluded from method 900. These diagrams and flowcharts are merely examples; as noted elsewhere, any operable combination of steps that are disclosed herein may be part of a given embodiment when called out in a claim.

Technical processes shown in the Figures or otherwise disclosed are performed automatically, e.g., by an enhanced system 202, unless otherwise indicated. Related non-claimed processes may also be performed in part automatically and in part manually to the extent action by a human person is implicated, e.g., in some situations a human 104 types text into a user interface. Regardless, no process contemplated as an embodiment herein is entirely manual or purely mental; none of the claimed processes can be performed solely in a human mind or on paper. Any claim interpretation to the contrary is squarely at odds with the present disclosure.

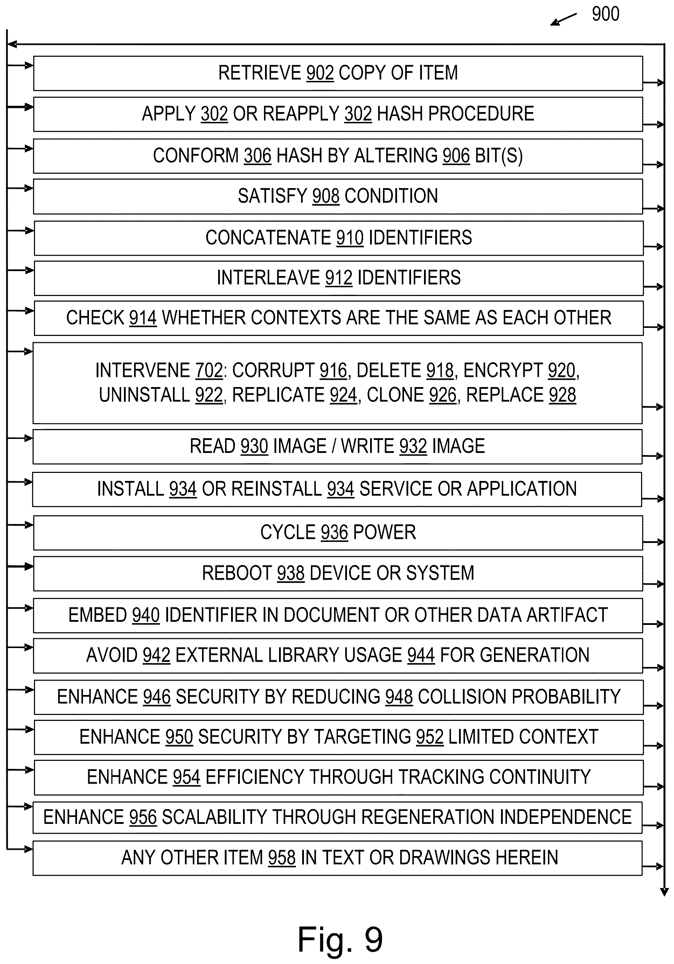

In a given embodiment zero or more illustrated steps of a process may be repeated, perhaps with different parameters or data to operate on. Steps in an embodiment may also be done in a different order than the top-to-bottom order that is laid out in Figure 9. Figure 9 is a supplemental portion of the textual and figure drawing examples of embodiments provided herein and the descriptions of embodiments provided herein. In the event of any alleged inconsistency, lack of clarity, or excessive breadth due to an interpretation of Figure 9, the content of this disclosure shall prevail over that interpretation of Figure 9.

Arrows in process or data flow figures indicate allowable flows; arrows pointing in more than one direction thus indicate that flow may proceed in more than one direction. Steps may be performed serially, in a partially overlapping manner, or fully in parallel within a given flow. In particular, the order in which flowchart 900 action items are traversed to indicate the steps performed during a process may vary from one performance instance of the process to another performance instance of the process. The flowchart traversal order may also vary from one process embodiment to another process embodiment. Steps may also be omitted, combined, renamed, regrouped, be performed on one or more machines, or otherwise depart from the illustrated flow, provided that the process performed is operable and conforms to at least one claim of an application or patent that includes or claims priority to the present disclosure. To the extent that a person of skill considers a given sequence S of steps which is consistent with Figure 9 to be non-operable, the sequence S is not within the scope of any claim. Any assertion otherwise is contrary to the present disclosure.

Some embodiments provide or utilize a MUIR method 900 which is performed by a computing system. The computing system includes multiple contexts 130, each context including a specification 132 of at least one of: a hardware device, a particular user account, a particular group of user accounts, a computational service, an application program, a location, a virtual machine, or a container which is a software virtualization mechanism. The specification 132 includes a data structure such as a focused list, a focused set, or another data structure focused on identifier value(s) of the context in question, or data 118 from which identifier value(s) of the context in question are obtained upon execution of a procedure 232, or both. The method includes: obtaining 230 a first context-specific identifier 136 which is specific to a first context 130 of the multiple contexts; obtaining 230 a second context-specific identifier 136 which is specific to a second context 130 of the multiple contexts, the second context including a different context than the first context (e.g., they are not both hardware device contexts); forming 206 a string 220 from at least the first context-specific identifier and the second context-specific identifier; computing 302 a cryptographic hash 212 of the string by applying a cryptographic hash procedure 214 to the string, the cryptographic hash including a first portion 216 and a second portion 216 (e.g., two portions of a UUID length - 16 bytes each or 36 characters each); utilizing 224 the first portion of the cryptographic hash as a first regenerable item 222; and utilizing 224 the second portion of the cryptographic hash as a second regenerable item 222. In some embodiments, one or both obtaining 230 steps is omitted, as the context-specific identifier is already present.

An item X is regenerable when a computer-implementable 602 regeneration method 604, 900 exists which upon execution regenerates 704 the value of item X in the absence 610 of any copy 608 of X. For example, one computer-implementable regeneration method 900 which is suitable for scenarios in which context-specific identifiers were previously obtained includes steps 206 (form a string), 302 (hash the string), and 304 (apportion the hash), because execution of those steps does not require the presence on the computing system of a copy of the item 222 which results from the execution of those steps. Another computer-implementable regeneration method 604, 900 includes steps 230 (obtain identifiers to place in the string), 206, 302, and 304. Another computer-implementable 602 regeneration method 900 includes steps 910 (concatenate, as an instance of step 206), 302, and 304. Another computer-implementable regeneration method 900 includes steps 912 (interleave, as an instance of step 206), 302, and 304. Another computer-implementable regeneration method 900 includes steps 206, 302, 304, and 306 (conform bits 620 to UUID 308 standard). By contrast, a method which does not perform hashing 302 to generate an item X (i.e., to generate X's value) but instead retrieves a previously generated copy of X is not a regeneration method; it is instead a retrieval method.

Some embodiments include regenerating 704 the first regenerable item 222 in the absence 610 of any copy 608 of the first regenerable item as opposed to retrieving 902 a previously generated 802 copy 608 of the first regenerable item, the regenerating including re-applying 302 the cryptographic hash procedure 214.

In some embodiments, each of the first context-specific identifier 136 and the second context-specific identifier 136 is free of random content 506, pseudo-random content 504, and any other nondeterministic content 502. For instance, per RCE 4122 a version 4 UUID and a version 7 UUID each include some randomly generated content, and on that basis are each excluded from these particular embodiments.

In some embodiments, each of the first context-specific identifier 136 and the second context-specific identifier 136 is free of timestamp content 508, date content 518, event counter content 510, sequence number content 512, and any other time-dependent content 514. For instance, per RCE 4122 UUIDs of version 1, 2, 6, and 7 each include some timestamp content, and on that basis are each excluded from these particular embodiments.

In some embodiments, the method includes conforming 306 the cryptographic hash 212 to a specification of a name-based universally unique identifier by altering 906 at least one bit of the computed cryptographic hash. One name-based universally unique identifier is specified in RFC 4122 as UUID version 3 and another is specified in RFC 4122 as UUID version 5. Assuming uuid is a zero-indexed array holding bits to form a UUID 308, conforming is performed in some embodiments by setting 906 version and variant bits thus per RFC 4122:
uuid[6] = (uuid[6] & 0x0F) | 0x50; // version 5
uuid[8] = (uuid[8] & 0x3F) | 0x80; // variant 10xx
Some embodiments set a different variant value; bits 10 indicate an RFC 9562 UUID, and bits 110 indicate a legacy Microsoft GUID (globally unique identifier). These embodiments conform to RFC 4122 at least as to version bits, some also conform to RFC 4122 as to variant bits. However, they do not conform to RFC 4122 as to the hash procedure 214, because RFC 4122 specifies MD5 or SHA-1, which are excluded from these embodiments due to the insufficient security of MD5 and SHA-1.

According to RFC 4122, some characteristics of a UUID (Universally Unique Identifier) are its 128-bit length 612, its guaranteed uniqueness across space and time, its ability to be generated without central coordination, and its compliance with a standardized format that includes hexadecimal digits separated by hyphens. A UUID serves as a globally unique identifier that can be generated on different systems without a central authority to manage identifier allocation.

In some embodiments, the method computes 302 a cryptographic hash including at least three portions 216 and utilizes 224 the at least three portions as respective regenerable items 222. In some, each of the regenerable items is at least sixteen bytes long, so the hash 212 is at least three times sixteen (i.e., 48) bytes long (i.e., 48 times 8 = 384 bits). For example, in some embodiments the hash procedure 214 performs SHA-512 hashing.

In some embodiments, the first regenerable item 222 and the second regenerable item 222 are each at least sixteen bytes long, the cryptographic hash procedure 214 has a collision probability 614 no greater than SHA-256 collision probability, and the method further includes satisfying 908 at least one of: the utilizing utilizes 224 the first regenerable item as a symmetric encryption key 310; the first context includes a specification of a hardware device 101, and the utilizing utilizes 224 the first regenerable item as a key 310 which is specific to the hardware device; the first context includes a specification of a particular user account 404, and the utilizing utilizes 224 the first regenerable item as a key 310 which is specific to the particular user account; the first context includes a specification of a particular group 402 of user accounts, and the utilizing utilizes 224 the first regenerable item as a key 310 which is specific to the particular group of user accounts; the first context includes a specification of a geographic location 410, and the utilizing utilizes 224 the first regenerable item as a key 310 which is specific to the geographic location; or the computing system includes a context 130 that includes a specification of a time 418, e.g., a time period or a date, the first context includes a specification of a time period 418, and the utilizing utilizes 224 the first regenerable item as a key 310 which is specific to the time period.

For example, some embodiments utilize 224 the first regenerable item as a symmetric encryption key 310 along with an algorithm such as Advanced Encryption Standard (AES), Blowfish, Twofish, or RC4 (Rivest Cipher 4). The regenerable item generation 802 software is employed in place of a key distribution system. That is, the symmetric encryption key 310 is generated at each encryption or decryption location in a computing system, instead of being distributed to those locations.

Some embodiments utilize 224 identifiers 222 in a Symmetric Key Encryption (SKE) equivalent scenario, such as payload targeting between two collaborating parties. Since the hash and its GUID representations can be recreated without the need of distributing a key or key seed, functionality 204 simplifies workflow by eliminating the requirements for key distribution, secure store, etc. The key is generated 802 at the collaboration source and destination. Such keys are targeted 952 in some scenarios. With an input 136 of Geo Location, for example, a package is targeted in some scenarios with a key that decodes for a specified user account in a specified geo location, e.g., to open email when in the assigned office. Some scenarios use a Broadcast Mobile Notification 136 that only shows up on devices in a specific office building. Some scenarios use a data processor instance 136 to determine whether they are permitted to process data from a given datacenter. Some scenarios use Time+UserAccount+Device to restrict accessibility to a particular user account on a particular device within a particular time period. More generally, some embodiments combine multiple contexts to create restrictions and targeting 952 to various context values.

As other examples, some embodiments utilize 224 the first regenerable item as a key 310 which is specific to a particular group 402 of user accounts, such as user accounts which belong to a particular security group, or user accounts which belong to a particular cloud computing tenant.

As other examples, some embodiments utilize 224 the first regenerable item as a key 310 which is specific to a particular geographic location, such as a global positioning system (GPS) location within a specified distance of a secured facility GPS coordinate, or within a specified distance of a particular user's current geographic location, or within a specified distance of a particular network device's geographic location.

As other examples, some embodiments use time as an input 136, so the resultant 222 is time bound. Some resultants 222 are also account bound, e.g., bound to a particular user account and a particular time period. When an embodiment uses a device identifier and a date identifier as inputs, the resulting output identifiers 222 will be same for that device whenever regenerated on that date.

### MUIR Configured Storage Media

Some embodiments include a configured computer-readable storage medium 112. Some examples of storage medium 112 include disks (magnetic, optical, or otherwise), RAM (random access memory), EEPROMs (electronically erasable read-only memories) or other ROMs (read-only memories), and other configurable memory, including in particular computer-readable storage media (which are not mere propagated signals). In some embodiments, the storage medium which is configured is in particular a removable storage medium 114 such as a CD, DVD, or flash memory. A general-purpose memory, which is removable or not, and is volatile or not, depending on the embodiment, is configured in the embodiment using items in the form of data 118 and instructions 116, read from a removable storage medium 114 and/or another source such as a network connection, to form a configured storage medium. The foregoing examples are not necessarily mutually exclusive of one another.

The configured storage medium 112 is capable of causing a computer system 202 to perform technical process steps for providing or utilizing MUIR functionality 204 as disclosed herein. The Figures thus help illustrate configured storage media embodiments and process (a.k.a. method) embodiments, as well as system and process embodiments. In particular, any of the method steps illustrated in Figure 3 or Figures 7 to 9, or otherwise taught herein, may be used to help configure a storage medium to form a configured storage medium embodiment.

Some embodiments use or provide a computer-readable storage device (a.k.a. medium) 112, 114 configured with data 118 and instructions 116 which upon execution by a processor 110 cause a computing system 202 to perform a MUIR method 900. This method 900 includes: obtaining 230 a first context-specific identifier which is specific to a first context; obtaining 230 a second context-specific identifier which is specific to a second context, the second context being different than the first context, each context 130 including a specification of at least one of: a hardware device, a particular user account, a particular group of user accounts, a computational service, an application program, a location, a time, a virtual machine, or a container which is a software virtualization mechanism; forming 206 a string from at least the first context-specific identifier and the second context-specific identifier; computing 302 a cryptographic hash of the string, the cryptographic hash including a first portion and a second portion; utilizing 224 at least one of the first portion and the second portion as a key or as an identifier or both; and regenerating 704 the cryptographic hash in the absence of any copy of the first portion and the absence of any copy of the second portion, the regenerating including recomputing 302 the cryptographic hash, the absence of a particular portion being absence 610 of the particular portion from the computing system during the regenerating until the recomputing recomputes the particular portion.

In some embodiments and scenarios, an intervening event 616 occurs 702 in an environment 100 that contains or communicates with the computing system 202, the intervening event occurs between computing 302 the cryptographic hash and regenerating 704 the cryptographic hash, and the intervening event corrupts 916 or deletes 918 or encrypts 920 at least one of: the first portion 216, or the second portion 216.

Without regeneration capability 204, the values of the portions 216 prior to their corruption / deletion / encryption would either become effectively unavailable (lost), or would need to be retrieved 902. Effective unavailability interferes with tracking 318 continuity 626. Storage for later retrieval is either unreliable, or consumes precious space within protected storage such as a registry. Accordingly, regeneration provides benefits not provided by those alternate approaches.

In some embodiments and scenarios, an intervening event 616 occurs 702 in an environment 100 that contains or communicates with the computing system 202, the intervening event occurs between computing 302 the cryptographic hash and regenerating 704 the cryptographic hash, and the intervening event includes at least one of: uninstalling 922 a service 406 which is identified by the first portion; uninstalling 922 an application program 408 which is identified by the first portion; creating 924 a replica of a service 406 which is identified by the first portion (the replica or the service or both are identified by the first portion); cloning 926 a software virtualization mechanism 414 which is identified by the first portion; cloning 926 a piece of software 632 which is identified by the first portion; or replacing 928 a version of an item 118 in an immutable infrastructure 630 which stores the first portion.

A shared characteristic of these example intervening events 616 is that each routinely scrambles, deletes, or otherwise hinders availability of at least one respective identifier 136. For example, cycling 936 power to a device scrambles values in RAM. As another example, an uninstall is often designed to remove all metadata associated with whatever is being uninstalled, including associated identifiers. Also, cloning and replication often allocate space for identifiers, but providing a value for a newly allocated identifier involves either retrieval of a copy (with corresponding disadvantages discussed elsewhere herein) or generation of a new value that breaks tracking continuity, unlike functionality 204). Replacement of an item in an immutable infrastructure 630 similarly can either retrieve a copy or generate a new value, without functionality 204.

In some embodiments, the method obtains 230 at least three context-specific identifiers 136, forms 206 a string from the at least three context-specific identifiers, designates 304 at least three portions of the cryptographic hash, and utilizes 224 each of the at least three portions as a key or as an identifier or both. In some of these, each portion is at least sixteen bytes long (UUID length 612).

Some embodiments generate 802 three identifiers 222 by combining two inputs 136. Some use a cryptographic hashing algorithm (e.g., SHA3) that generates 48-byte output 212. Some embodiments use identifier 222 portions in different combinations, e.g., given a regenerable identifier AB and a regenerable CD, three regenerable identifiers AB, BC, and CD are output.

In some embodiments, the utilizing 224 includes writing 932 at least one of the first portion and the second portion in a golden image 606, or reading 930 at least one of the first portion and the second portion from a golden image, or both. A golden image 606 is a pre-configured snapshot of a computer system's software and data. In many scenarios, the golden image includes a copy of the operating system, applications, and settings. A golden image serves as a template to quickly and consistently deploy new systems or virtual machines. A golden image is also referred to as a master image, base image, or clone image.

### Additional Observations on MUIR

Support for the discussion of MUIR functionality 204 herein is provided under various headings. However, it is all intended to be understood as an integrated and integral part of the present disclosure's discussion of the contemplated embodiments. This disclosure is meant to be understood as a whole. In particular, this disclosure is unlikely to be fully and properly understood during or after only a single top-to-bottom pass through its text. For a full and proper understanding, most if not all readers will also use keyword searches, reference numeral searches, correlation of the specification text with the drawing figures, correlation of the claims with the rest of the text and with the drawing figures, and other nonlinear reading approaches, in addition to reading the full text from top to bottom.

One of skill will recognize that not every part of this disclosure, or any particular details therein, are necessarily required to satisfy legal criteria such as enablement, written description, best mode, novelty, nonobviousness, adequate claim support via technical teachings in the description, inventive step, or industrial applicability. Any apparent conflict with any other patent disclosure, even from the owner of the present subject matter, or any reference external to the present disclosure, has no role in interpreting the claims presented in this patent disclosure. It is in the context of this understanding, which pertains to all parts of the present disclosure, that examples and observations are offered herein.

Some embodiments taught herein provide or utilize a method for context-aware GUID generation for enhanced continuity. A GUID is a kind of UUID, and a UUID is a kind of identifier. A technical issue addressed by some embodiments is the absence of a consistent and recoverable GUID generation mechanism in environments where a device's Serial Number is not accessible, such as within Microsoft Windows^{®} Subsystem for Linux^{®} (WSL^{™}) software (Windows and WSL are marks of Microsoft Corporation). This challenge complicates the maintenance of device and Endpoint Detection and Response (EDR) instance integrity, particularly during uninstallations and reinstallations, leading to inaccuracies and multiple device identifiers for a single host machine. More generally, in some scenarios when a security plugin is uninstalled and subsequently reinstalled, it generates a new GUID, creating inconsistencies in device identification. In some scenarios, an operating system (OS) clean installation generates a new GUID for use by EDR software.

Some embodiments provide or utilize a solution which involves generating 302 a hash (e.g., SHA2) of a Host Machine Serial Number and a User SID (security identifier), which is a unique string in the domain. This 64-character hexadecimal string is then divided 304 into two parts (32 hexadecimal characters each), with each part 216 converted 306 into a GUID representation. This deterministic process 900 ensures that the resulting GUIDs remain consistent for a given user account on a specific machine. One implementation aligns with the UUIDv5 specification as to bits but utilizes SHA2 instead of SHA1 to ensure universal uniqueness, produces two GUIDs instead of one, and complies with RFC 4122 otherwise. This method 900 eliminates a need for external library dependencies 944 and ensures that the GUIDs can be recovered even after uninstalls 922.

One embodiment concatenates 910 Device Serial Number and User SID identifiers, calculates 302 SHA2 of the concatenated string, fixes 306 the 7th byte to reflect UUIDv5 and fixes 306 the 9th byte to align with RFC 4122, and then uses 304 the first and second 16 bytes 618 of hash as UUID1 and UUID2, respectively.

One technical advantage of this approach 900 is its ability to generate consistent and recoverable GUIDs, thereby ensuring continuity and integrity across various use cases. This mechanism 204 functions efficiently in multi-user environments, as the User SID is utilized as input, providing unique GUIDs for different users on the same machine. Furthermore, this solution 900 mitigates the risk of GUID collisions and enhances 946 security by employing SHA2 for hash generation. The method 900 also accommodates various deployment scenarios, including Virtual Desktops 414, Immutable Infrastructures 630, and VM (virtual machine) 420 Migration, making it a versatile solution for diverse environments.

In instances where a user context is not available or required, some embodiments generate two GUIDs from an input device serial number that will always remain consistent for the given device. This provides an equivalence of two device serial numbers which are guaranteed to be unique.

Unlike UUID v1, which relies on the device MAC address and timestamp, or UUID v4, which generates random bits, some embodiments of method 900 ensure that the resulting GUIDs are always the same for a given user on a given machine.

Some embodiments provide technical benefits such as enhanced GUID generation mechanisms, or improved device and EDR instance continuity and integrity, or both, across various use cases. Regeneratable identifiers 222 for devices 101, user accounts 404, and application 408 combinations beneficially assist in generating consistent resource IDs for a given computational resource. Regeneratable identifiers 222 are also applicable across various applications 408 to correlate resources without needing an identifier distribution framework or other coordination between the applications for UUID generation. For example, a GUID (Device + User Account) can be embedded 940 in a word processor document or a spreadsheet document or other user-edited document to track where the document was created or last edited.

Some embodiments beneficially provide a deterministic GUID generation mechanism, e.g., a method 900 of generating consistent and recoverable GUIDs using a hash (SHA2) of the Machine Serial Number and User SID. This ensures that the resulting GUIDs are always the same for a given user on a given machine, providing continuity and integrity across various use cases.

Some embodiments beneficially operate in alignment with a UUIDv5 specification. Aligning an implementation with the UUIDv5 specification while using SHA2 instead of SHA1 helps ensure universal uniqueness and compliance, and helps make the GUIDs valid and universally unique, reducing the risk of collisions.

Some embodiments beneficially provide multi-user scenario support, by their ability to generate unique GUIDs for different user accounts on the same machine by using the User SID (security identifier) as input 136. This feature is particularly useful in multi-user environments and enhances the versatility of the solution 202.

Some embodiments beneficially eliminate 942 one or more external library dependencies. In some, a method 900 of generating GUIDs is free of reliance 944 on external libraries such as date-time libraries, random number generator libraries, or GUID storage-and-retrieval libraries, thus helping ensure that the GUIDs are recoverable even after uninstalls. This reduces the complexity and potential vulnerabilities associated with external dependencies.

Enhanced 956 scalability is another technical benefit, because an arbitrarily large number of different instances of a piece of software or different instances of an artifact need not rely on a central registry but are able instead to each get, through (re)generation , their own respective copy of the first portion and/or the second portion of the computed hash 212.

### Internet of Things

In some embodiments, the system 202 is, or includes, an embedded system such as an Internet of Things system. "loT" or "Internet of Things" means any networked collection of addressable embedded computing or data generation or actuator nodes. An individual node is referred to as an internet of things device 101 or loT device 101 or internet of things system 102 or loT system 102. Such nodes are examples of computer systems 102 as defined herein, and may include or be referred to as a "smart" device, "endpoint", "chip", "label", or "tag", for example, and loT may be referred to as a "cyber-physical system". In the phrase "embedded system" the embedding referred to is the embedding a processor and memory in a device, not the embedding of debug script in source code.

loT nodes and systems typically have at least two of the following characteristics: (a) no local human-readable display; (b) no local keyboard; (c) a primary source of input is sensors that track sources of non-linguistic data to be uploaded from the loT device; (d) no local rotational disk storage - RAM chips or ROM chips provide the only local memory; (e) no CD or DVD drive; (f) being embedded in a household appliance or household fixture; (g) being embedded in an implanted or wearable medical device; (h) being embedded in a vehicle; (i) being embedded in a process automation control system; or (j) a design focused on one of the following: environmental monitoring, civic infrastructure monitoring, agriculture, industrial equipment monitoring, energy usage monitoring, human or animal health or fitness monitoring, physical security, physical transportation system monitoring, object tracking, inventory control, supply chain control, fleet management, or manufacturing. loT communications may use protocols such as TCP/IP (Transmission Control Protocol/Internet Protocol), Constrained Application Protocol (CoAP), Message Queuing Telemetry Transport (MQTT), Advanced Message Queuing Protocol (AMQP), HTTP, HTTPS, Transport Layer Security (TLS), UDP, or Simple Object Access Protocol (SOAP), for example, for wired or wireless (cellular or otherwise) communication. loT storage or actuators or data output or control may be a target of unauthorized access, either via a cloud, via another network, or via direct local access attempts.

### Technical Character

The technical character of embodiments described herein will be apparent to one of ordinary skill in the art, and will also be apparent in several ways to a wide range of attentive readers.

For example, some embodiments address technical activities such as forming 206 a string 220 without employing human senses or human actions, hashing 302 the string 220 without employing human senses or human actions, designating 304 hash portions 216 without employing human senses or human actions, utilizing 224 designated hash portions as identifiers or keys without employing human senses or human actions, regenerating 704 an item 222 without employing human senses or human actions, and many others, which are each an activity deeply rooted in computing technology. The "without employing human senses" and "without employing human actions" qualifiers are stated here explicitly to help prevent misunderstanding by some readers, but they would be understood by one of skill in the art as inherent to the embodiments. These qualifiers shall govern the interpretation of the claims even when not explicitly recited in the claims. To improve readability and reduce disclosure length, these qualifiers are not explicitly repeated throughout this disclosure, but the disclosure should be read as if they were thus repeated.

Moreover, some of the technical mechanisms discussed in this disclosure include, e.g., hash procedures 214, combination procedures 208, utilization procedure APIs 228, other interfaces 228, and various particular sets of instructions 116 executable by processors 110. None of these are mental concepts or present merely on paper.

In addition, some of the technical effects discussed include, e.g., increased security, reduced identifier proliferation, increased auditing 316 and tracking 318 effectiveness, and increased efficiency, relative to other approaches. Other technical effects are also discussed herein, e.g., in the descriptions of technical benefits and technical challenges.

In short, purely mental processes, activities limited to pen-and-paper, and abstract ideas *per* se are clearly excluded from the scope of any claimed embodiment. Other advantages based on the technical characteristics of the teachings will also be apparent to one of skill from the description provided.

One of skill understands that the operations performed by functionality 204, and other computational activities described herein are each a technical activity which cannot be performed mentally at all, because the mechanisms in question lack I/O devices that would allow a human to somehow "read" or "write" values within the computing system as described. Hence, computing technology operational improvements such as the various examples of functionality 204 described herein are improvements to computing technology. People manifestly lack the speed and the digital communication and computation capabilities which are required to perform functionality 204 operations as taught herein.

Different embodiments provide different technical benefits or other advantages in different circumstances, but one of skill informed by the teachings herein will acknowledge that particular technical advantages will likely follow from particular embodiment features or feature combinations, as noted at various points herein.

Any generic or abstract aspects of described embodiments are integrated into a practical application, such as an installation tool, an encryption or decryption tool, a forensic analysis tool, an intrusion detection tool, an anomaly detection tool, or an auditing tool. The foregoing are examples, not a comprehensive list of all potential practical applications of the present disclosure's teachings.

Many embodiments are suitable for implementation in a single device, but some embodiments also span multiple devices.

Some embodiments described herein may be viewed by some people in a broader context. For instance, concepts such as efficiency, reliability, redundancy, or waste may be deemed pertinent to a particular embodiment. However, it does not follow from the availability of a broad context that exclusive rights are being sought herein for abstract ideas; they are not. In particular, no claim is made to encryption/decryption activities generally, or identification activities generally, as opposed to the particular functionality 204 methods, systems, and devices described and claimed in the eventual final claims based on the present disclosure.

Rather, the present disclosure is focused on providing appropriately specific embodiments whose technical effects fully or partially solve particular technical problems noted herein, e.g., in connection with one of the marker phrases "how to", "problem", or "challenge", or otherwise apparent to one of skill in the art. Other systems, devices, and processes involving efficiency, reliability, redundancy, or waste are outside the present scope. Accordingly, vagueness, mere abstractness, lack of technical character, and accompanying proof problems are also avoided under a proper understanding of the present disclosure.

### Additional Combinations and Variations

Any combination of logic, components, communications, software, and/or their functional equivalents may also be combined with any of the systems and their variations described above. A process may include any steps described herein in any subset or combination or sequence which is operable. Each variant may occur alone, or in combination with any one or more of the other variants. Each variant may occur with any of the processes and each process may be combined with any one or more of the other processes. Each process or combination of processes, including variants, may be combined with any of the configured storage medium combinations and variants described above.

More generally, one of skill will recognize that not every part of this disclosure, or any particular details therein, are necessarily required to satisfy legal criteria such as enablement, written description, or best mode. Also, embodiments are not limited to the particular scenarios, examples, operating environments, tools, peripherals, process flows, identifiers, naming conventions, notations, control flows, data flows, or other implementation choices described or used herein. Any apparent conflict with any other patent disclosure, even from the owner of the present subject matter, has no role in interpreting the claims presented in this patent disclosure.

### Acronyms, abbreviations, names, and symbols

Some acronyms, abbreviations, names, and symbols are defined below. Others are defined elsewhere herein, or do not require definition here in order to be understood by one of skill.
ALU: arithmetic and logic unit
API: application program interface
BIOS: basic input/output system
CD: compact disc
CPU: central processing unit
DVD: digital versatile disk or digital video disc
FPGA: field-programmable gate array
FPU: floating point processing unit
GDPR: General Data Protection Regulation
GPU: graphical processing unit
GUI: graphical user interface
HTTPS: hypertext transfer protocol, secure
laaS or IAAS: infrastructure-as-a-service
LAN: local area network
MAC: media access control
OS: operating system
PaaS or PAAS: platform-as-a-service
RAM: random access memory
ROM: read only memory
TPU: tensor processing unit
UEFI: Unified Extensible Firmware Interface
WAN: wide area network

### Some Additional Terminology

Reference is made herein to exemplary embodiments such as those illustrated in the drawings, and specific language is used herein to describe the same. But alterations and further modifications of the features illustrated herein, and additional technical applications of the abstract principles illustrated by particular embodiments herein, which would occur to one skilled in the relevant art(s) and having possession of this disclosure, should be considered within the scope of the claims.

The meaning of terms is clarified in this disclosure, so the claims should be read with careful attention to these clarifications. Specific examples are given, but those of skill in the relevant art(s) will understand that other examples may also fall within the meaning of the terms used, and within the scope of one or more claims. Terms do not necessarily have the same meaning here that they have in general usage (particularly in non-technical usage), or in the usage of a particular industry, or in a particular dictionary or set of dictionaries. Reference numerals may be used with various phrasings, to help show the breadth of a term. Sharing a reference numeral does not mean necessarily sharing every aspect, feature, or limitation of every item referred to using the reference numeral. Omission of a reference numeral from a given piece of text does not necessarily mean that the content of a Figure is not being discussed by the text. The present disclosure asserts and exercises the right to specific and chosen lexicography. Quoted terms are being defined explicitly, but a term may also be defined implicitly without using quotation marks. Terms may be defined, either explicitly or implicitly, here in the Detailed Description and/or elsewhere in the application file.

A "computer system" (a.k.a. "computing system") may include, for example, one or more servers, motherboards, processing nodes, laptops, tablets, personal computers (portable or not), personal digital assistants, smartphones, smartwatches, smart bands, cell or mobile phones, other mobile devices having at least a processor and a memory, video game systems, augmented reality systems, holographic projection systems, televisions, wearable computing systems, and/or other device(s) providing one or more processors controlled at least in part by instructions. The instructions may be in the form of firmware or other software in memory and/or specialized circuitry.

A "multithreaded" computer system is a computer system which supports multiple execution threads. The term "thread" should be understood to include code capable of or subject to scheduling, and possibly to synchronization. A thread may also be known outside this disclosure by another name, such as "task," "process," or "coroutine," for example. However, a distinction is made herein between threads and processes, in that a thread defines an execution path inside a process. Also, threads of a process share a given address space, whereas different processes have different respective address spaces. The threads of a process may run in parallel, in sequence, or in a combination of parallel execution and sequential execution (e.g., time-sliced).

A "processor" is a thread-processing unit, such as a core in a simultaneous multithreading implementation. A processor includes hardware. A given chip may hold one or more processors. Processors may be general purpose, or they may be tailored for specific uses such as vector processing, graphics processing, signal processing, floating-point arithmetic processing, encryption, I/O processing, machine learning, and so on.

"Kernels" include operating systems, hypervisors, virtual machines, BIOS or UEFI code, and similar hardware interface software.

"Code" means processor instructions, data (which includes constants, variables, and data structures), or both instructions and data. "Code" and "software" are used interchangeably herein. Executable code, interpreted code, and firmware are some examples of code.

"Program" is used broadly herein, to include applications, kernels, drivers, interrupt handlers, firmware, state machines, libraries, and other code written by programmers (who are also referred to as developers) and/or automatically generated.

A "routine" is a callable piece of code which normally returns control to an instruction just after the point in a program execution at which the routine was called. Depending on the terminology used, a distinction is sometimes made elsewhere between a "function" and a "procedure": a function normally returns a value, while a procedure does not. As used herein, "routine" includes both functions and procedures. A routine may have code that returns a value (e.g., sin(x)) or it may simply return without also providing a value (e.g., void functions).

"Service" as a noun means a consumable program offering, in a cloud computing environment or other network or computing system environment, which provides resources to multiple programs or provides resource access to multiple programs, or does both. A service implementation may itself include multiple applications or other programs.

"Cloud" means pooled resources for computing, storage, and networking which are elastically available for measured on-demand service. A cloud may be private, public, community, or a hybrid, and cloud services may be offered in the form of infrastructure as a service (laaS), platform as a service (PaaS), software as a service (SaaS), or another service. Unless stated otherwise, any discussion of reading from a file or writing to a file includes reading/writing a local file or reading/writing over a network, which may be a cloud network or other network, or doing both (local and networked read/write). A cloud may also be referred to as a "cloud environment" or a "cloud computing environment".

"Access" to a computational resource includes use of a permission or other capability to read, modify, write, execute, move, delete, create, or otherwise utilize the resource. Attempted access may be explicitly distinguished from actual access, but "access" without the "attempted" qualifier includes both attempted access and access actually performed or provided.

Herein, activity by a user refers to activity by a user device or activity by a user account or user session, or by software on behalf of a user, or by hardware on behalf of a user. Activity is represented by digital data or machine operations or both in a system. Activity within the scope of any claim based on the present disclosure excludes human action, but does allow coverage of computational action which is performed in response to human action. Software or hardware activity "on behalf of a user" accordingly refers to software or hardware activity on behalf of a user device or on behalf of a user account or a user session or on behalf of another mechanism or computational artifact, and thus does not bring human behavior per se within the scope of any embodiment or any claim.

"Digital data" means data in a computing system, as opposed to data written on paper or thoughts in a person's mind, for example. Similarly, "digital memory" refers to a non-living device, e.g., computing storage hardware, not to human or other biological memory.

As used herein, "include" allows additional elements (i.e., includes means comprises) unless otherwise stated.

"Optimize" means to improve, not necessarily to perfect. For example, it may be possible to make further improvements in a program or an algorithm which has been optimized.

"Process" is sometimes used herein as a term of the computing science arts, and in that technical sense encompasses computational resource users, which may also include or be referred to as coroutines, threads, tasks, interrupt handlers, application processes, kernel processes, procedures, or object methods, for example. As a practical matter, a "process" in a computing system is a computational entity identified by system utilities such as Windows^{®} Task Manager, Linux^{®} ps, or similar utilities in other operating system environments (marks of Microsoft Corporation, Linus Torvalds, respectively). "Process" may also be used as a patent law term of art, e.g., in describing a process claim as opposed to a system claim or an article of manufacture (configured storage medium) claim. Similarly, "method" is used herein primarily as a patent law term of art (akin to a "method") but it is also a technical term in the computing science arts (a kind of "routine"). "Process" and "method" in the patent law sense are used interchangeably herein. Those of skill will understand which meaning is intended in a particular instance, and will also understand that a given claimed process or method (in the patent law sense) may sometimes be implemented using one or more processes or methods (in the computing science sense).

"Automatically" means by use of automation (e.g., general purpose computing hardware configured by software for specific operations and technical effects discussed herein), as opposed to without automation. In particular, steps performed "automatically" are not performed by hand on paper or in a person's mind, although they may be initiated by a human person or guided interactively by a human person. Automatic steps are performed with a machine in order to obtain one or more technical effects that would not be realized without the technical interactions thus provided. Steps performed automatically are presumed to include at least one operation performed proactively.

One of skill understands that technical effects are the presumptive purpose of a technical embodiment. The mere fact that calculation is involved in an embodiment, for example, and that some calculations can also be performed without technical components (e.g., by paper and pencil, or even as mental steps) does not remove the presence of the technical effects or alter the concrete and technical nature of the embodiment, particularly in real-world embodiment implementations. Functionality 204 operations discussed herein (whether recited expressly in the Figures or not), are understood to be inherently non-human. A human mind cannot interface directly with a computing device to perform the functionality 204 steps taught herein. This would all be well understood by persons of skill in the art in view of the present disclosure. Moreover, one of skill understands that functionality 204 cannot be implemented merely with conventional tools and steps, because actual implementation requires the use of teachings which were first provided in the present disclosure, e.g., teachings that support the recited technical effects and technical operations.

"Computationally" likewise means a computing device (processor plus memory, at least) is being used, and excludes obtaining a result by mere human thought or mere human action alone. For example, doing arithmetic with a paper and pencil is not doing arithmetic computationally as understood herein. Computational results are faster, broader, deeper, more accurate, more consistent, more comprehensive, and/or otherwise provide technical effects that are beyond the scope of human performance alone. "Computational steps" are steps performed computationally. Neither "automatically" nor "computationally" necessarily means "immediately".

"Proactively" means without a direct request from a user, and indicates machine activity rather than human activity. Indeed, a user may not even realize that a proactive step by an embodiment was possible until a result of the step has been presented to the user. Except as otherwise stated, any computational and/or automatic step described herein is presumptively done proactively in at least some of the embodiments.

"Based on" means computationally based on at least, not based exclusively on. Thus, a calculation based on X depends computationally on at least X, and may also depend computationally on Y.

Throughout this document, use of the optional plural "(s)", "(es)", or "(ies)" means that one or more of the indicated features is present. For example, "processor(s)" means "one or more processors" or equivalently "at least one processor".

"At least one" of a list of items means one of the items, or two of the items, or three of the items, and so on up to and including all N of the items, where the list is a list of N items. The presence of an item in the list does not require the presence of the item (or a check for the item) in an embodiment. For instance, if an embodiment of a system is described herein as including at least one of A, B, C, or D, then a system that includes A but does not check for B or C or D is an embodiment, and so is a system that includes A and also includes B but does not include or check for C or D. Similar understandings pertain to items which are steps or step portions or options in a method embodiment. This is not a complete list of all possibilities; it is provided merely to aid understanding of the scope of "at least one" that is intended herein.

In claims and elsewhere herein, labels such as (a), (b), etc. in a method description are meant to aid legibility of the description, not to impose a strict order or a total ordering of actions in the method. For instance, steps labeled as (a), (b), etc. for convenience may overlap in some embodiments, or interleave in some embodiments. Step performance order may nonetheless be indicated by verb tenses, or be indicated otherwise to one of skill such as when completion of one step is a practical prerequisite to another step.

For the purposes of United States law and practice, use of the word "step" herein, in the claims or elsewhere, is not intended to invoke means-plus-function, step-plus-function, or 35 United State Code Section 112 Sixth Paragraph / Section 112(f) claim interpretation. Any presumption to that effect is hereby explicitly rebutted.

For the purposes of United States law and practice, the claims are not intended to invoke means-plus-function interpretation unless they use the phrase "means for". Claim language intended to be interpreted as means-plus-function language, if any, will expressly recite that intention by using the phrase "means for". When means-plus-function interpretation applies, whether by use of "means for" and/or by a court's legal construction of claim language, the means recited in the specification for a given noun or a given verb should be understood to be linked to the claim language and linked together herein by virtue of any of the following: appearance within the same block in a block diagram of the figures, denotation by the same or a similar name, denotation by the same reference numeral, a functional relationship depicted in any of the figures, a functional relationship noted in the present disclosure's text. For example, if a claim limitation recited a "zac widget" and that claim limitation became subject to means-plus-function interpretation, then at a minimum all structures identified anywhere in the specification in any figure block, paragraph, or example mentioning "zac widget", or tied together by any reference numeral assigned to a zac widget, or disclosed as having a functional relationship with the structure or operation of a zac widget, would be deemed part of the structures identified in the application for zac widgets and would help define the set of equivalents for zac widget structures.

One of skill will recognize that this disclosure discusses various data values and data structures, and recognize that such items reside in a memory (RAM, disk, etc.), thereby configuring the memory. One of skill will also recognize that this disclosure discusses various algorithmic steps which are to be embodied in executable code in a given implementation, and that such code also resides in memory, and that it effectively configures any general-purpose processor which executes it, thereby transforming it from a general-purpose processor to a special-purpose processor which is functionally special-purpose hardware.

Accordingly, one of skill would not make the mistake of treating as non-overlapping items (a) a memory recited in a claim, and (b) a data structure or data value or code recited in the claim. Data structures and data values and code are understood to reside in a computer system memory, even when a claim does not explicitly recite that residency for each and every data structure or data value or piece of code mentioned. Accordingly, explicit recitals of such residency are not required. However, they are also not prohibited, and one or two select recitals may be present for emphasis, without thereby excluding all the other data values and data structures and code from residency. Likewise, code functionality recited in a claim is understood to configure a computer system hardware processor, regardless of whether that configuring quality is explicitly recited in the claim.

Throughout this document, unless expressly stated otherwise any reference to a step in a process presumes that the step may be performed directly by a party of interest and/or performed indirectly by the party through intervening mechanisms and/or intervening entities, and still lie within the scope of the step. That is, direct performance of the step by the party of interest is not required unless direct performance is an expressly stated requirement. For example, a computational or other electronic or electrical device step on behalf of a party of interest, with regard to a destination or object, may involve intervening action, such as any action recited in this disclosure or inherent in a step recited in this disclosure, yet still be understood as being performed directly by or on behalf of the party of interest. Example verbs listed herein may overlap in meaning or even be synonyms; separate verb names do not dictate separate functionality in every case.

Some people have asserted, outside the present disclosure, that certain verbs indicate human activity, particularly human mental activity. Regardless of their accuracy in other contexts, those assertions are not a correct and accurate basis for the interpretation of any claim supported by the present disclosure, regardless of where they were made. No reference outside the present disclosure to human action associated with a given verb can provide a legally correct basis for the interpretation of any verb recited in any claim supported by the present disclosure. For example, any and all of the combining, designating, detecting, and determining described and claimed herein is artificial activity, not human activity.

It is well-established in patent law that proper interpretation of a claim begins with the claim itself, then looks to other claims, then seeks meaning for the claim and its limitations in view of the supporting specification, including the disclosure's text and any drawing figures, while applying the viewpoint of a person skilled in the art. To be reasonable, any claim interpretation must be consistent with the specification. Only if the meaning of claim language remains unclear after considering the claims and their supporting disclosure does it become proper to look for interpretive guidance at any use of the claim language outside the four corners of the patent application itself.

Relying on external assertions to establish that certain verbs denote human activity elsewhere and therefore also denote mental steps or other human activity within claims herein is legally incorrect. Such reliance is arbitrary and capricious when the specification clearly teaches that such human activity is outside the scope of the claims, as the current specification clearly teaches. Relying on such external assertions is also disrespectful of the efforts of patent practitioners and inventors to make it clear that human activity is not being claimed.

To the extent any human activity is arguably within the scope of any claim based on the present disclosure, that human activity scope is hereby expressly disclaimed and expressly disavowed. Human-machine interaction may be properly noted in a claim for context, e.g., when a claim recites that a user input is received by a computing system. But only the portion of the effective claim scope which is computational and supported herein by the description of computing hardware, interfaces, algorithms, data structures, and/or other non-human mechanisms, as understood by one of skill in the art, is retained.

Whenever reference is made to data or instructions, it is understood that these items configure a computer-readable memory and/or computer-readable storage medium, thereby transforming it to a particular article, as opposed to simply existing on paper, in a person's mind, or as a mere signal being propagated on a wire, for example. For the purposes of patent protection in the United States, a memory or other storage device or other computer-readable storage medium is not a propagating signal or a carrier wave or mere energy outside the scope of patentable subject matter under United States Patent and Trademark Office (USPTO) interpretation of the In re Nuijten case. No claim covers a signal per se or mere energy in the United States, and any claim interpretation that asserts otherwise in view of the present disclosure is unreasonable on its face. Unless expressly stated otherwise in a claim granted outside the United States, a claim does not cover a signal per se or mere energy.

Moreover, notwithstanding anything apparently to the contrary elsewhere herein, a clear distinction is to be understood between (a) computer readable storage media and computer readable memory, on the one hand, and (b) transmission media, also referred to as signal media, on the other hand. A transmission medium is a propagating signal or a carrier wave computer readable medium. By contrast, computer readable storage media and computer readable memory and computer readable storage devices are not propagating signal or carrier wave computer readable media. Unless expressly stated otherwise in the claim, "computer readable medium" means a computer readable storage medium, not a propagating signal per se and not mere energy.

An "embodiment" herein is an example. The term "embodiment" is not interchangeable with "the invention". Embodiments may freely share or borrow aspects to create other embodiments (provided the result is operable), even if a resulting combination of aspects is not explicitly described per se herein. Requiring each and every permitted combination to be explicitly and individually described is unnecessary for one of skill in the art, and would be contrary to policies which recognize that patent specifications are written for readers who are skilled in the art. Formal combinatorial calculations and informal common intuition regarding the number of possible combinations arising from even a small number of combinable features will also indicate that a large number of aspect combinations exist for the aspects described herein. Accordingly, requiring an explicit recitation of each and every combination would be contrary to policies calling for patent specifications to be concise and for readers to be knowledgeable in the technical fields concerned.

### Remarks Regarding Reference Numerals

Reference numerals are provided for convenience and in support of the drawing figures and as part of the text of the specification, which collectively describe aspects of embodiments by reference to multiple items. Items which do not have a unique reference numeral may nonetheless be part of a given embodiment. For better legibility of the text, a given reference numeral is recited near some, but not all, recitations of the referenced item in the text. The same reference numeral may be used with reference to different examples or different instances of a given item.

A list of multiple reference numerals given with an item, e.g., language similar to "item 1, 2, 3", indicates that the item is an example of a respective category associated with each listed reference numeral. For example, "laptop 101, 102" indicates that a laptop is both a machine 101 and a computing system 102. A distinction in this example is that a computing system 102 contains one or more machines 101, whereas reference numeral 101 refers to a single machine, e.g., a single laptop, a single smartphone, a single workstation, a single Internet of Things device, etc. However, reference numerals for more general categories are often omitted herein for better readability, particularly when one of skill would acknowledge that the more general category encompasses a more specific category whose reference numeral is recited.

The following remarks pertain to particular reference numerals:
100 operating environment, also referred to as computing environment; includes one or more systems 102
101 machine in a system 102, e.g., any device having at least a processor 110 and having a distinct identifier such as an IP address or a MAC (media access control) address; may be a physical machine or be a virtual machine implemented on physical hardware
102 computer system, also referred to as a "computational system" or "computing system", and when in a network may be referred to as a "node"
104 users, e.g., user of an enhanced system 202
106 peripheral device
108 network generally, including, e.g., LANs, WANs, software-defined networks, clouds, and other wired or wireless networks
110 processor or non-empty set of processors; includes hardware
112 computer-readable storage medium, e.g., RAM, hard disks; also referred to as storage device
114 removable configured computer-readable storage medium
116 instructions executable with processor; may be on removable storage media or in other memory (volatile or nonvolatile or both)
118 digital data in a system 102; data structures, values, source code, and other examples are discussed herein
120 kernel(s), e.g., operating system(s), BIOS, UEFI, device drivers; also refers to an execution engine such as a language runtime
122 software tools, software applications, web browsers, CIDFP software, security controls; hardware tools; computational
124 cloud, also referred to as cloud environment or cloud computing environment
126 display screens, also referred to as "displays"
128 hardware, software, or hardware-software combination that is not otherwise associated with a reference numeral 106, 108, 110, 112, 114, e.g., power supply, application program interface (API), network interface
202 enhanced system, i.e., system 102 enhanced with functionality 204 as taught herein
204 MUIR functionality (also referred to as functionality 204 and other terms associated with reference numeral 204), e.g., a mechanism which performs or is configured to perform steps 206 (form a string), 302 (hash the string), and 304 (apportion the hash), or steps 910 (concatenate, as an instance of step 206), 302, and 304, or steps 912 (interleave, as an instance of step 206), 302, and 304, or any mechanism which performs or is configured to perform a sequence of identifier regeneration activities first disclosed herein, or a sequence of key regeneration activities first disclosed herein, or to perform a novel method 900 first disclosed herein
228 interface, e.g., network interface card, API, user interface, language model interface, or other mechanism by or through which separable items communicate in a computing system, where examples of separable include physically separable, separately compilable, separately installable, or separably replaceable without loss of functionality
700 flowchart; 700 also refers to MUIR methods that are illustrated by or consistent with the Figure 7 flowchart or any variation of the Figure 7 flowchart described herein
800 flowchart; 800 also refers to MUIR methods that are illustrated by or consistent with the Figure 8 flowchart or any variation of the Figure 8 flowchart described herein
900 flowchart; 900 also refers to MUIR methods that are illustrated by or consistent with the Figure 9 flowchart or any variation of the Figure 9 flowchart described herein; the Figure 9 flowchart, which incorporates the flowcharts of Figure 7 and Figure 8, the steps implicit or express in Figures 1 through 6, and all other steps taught herein, or methods that are illustrated by or consistent with any variation of the Figure 9 flowchart described herein; all MUIR method steps are computational or otherwise artificial, not human activity
958 any step or item discussed in the present disclosure that has not been assigned some other reference numeral; 958 may thus be shown expressly as a reference numeral for various steps or items or both, and may properly be inserted as a reference numeral (in the current disclosure or any subsequent patent application which claims priority to the current disclosure) for various steps or items or both without thereby adding new matter

### Conclusion

In some embodiments, regenerable items 222 serve as identifiers 136 or keys 310 or both. A regenerable items tuple 520 is generated 802 by combining 206 context-specific identifiers 136 into a string 220, hashing 302 the string, and designating 304 individual hash portions 216 as respective regenerable items 222. Regenerable items maintain 954 artifact tracking continuity 626 after a reinstall 934, a reboot 938, or another intervening event 702 without retrieval 902 of a previously generated value from a registry or state file. Some regenerable items 222 conform 306 to a universally unique identifier specification. Some regenerable items 222 are free of reliance on nondeterministic content 502, and some are free of reliance on time-dependent content 514.

Embodiments are understood to also themselves include or benefit from tested and appropriate security controls and privacy controls such as the General Data Protection Regulation (GDPR), and to comply with all applicable laws and regulations, e.g., the European Union Artificial Intelligence Act (EU Al Act) when applicable. Use of the tools and techniques taught herein can be done together with such controls in compliance with such laws and regulations.

Although Microsoft technology is used in some examples, the teachings herein are not limited to use in technology supplied or administered by Microsoft. Under a suitable license, for example, the present teachings could be embodied in products or services provided by other vendors.

Although particular embodiments are expressly illustrated and described herein as processes, as configured storage media, or as systems, it will be appreciated that discussion of one type of embodiment also generally extends to other embodiment types. For instance, the descriptions of processes in connection with the Figures also help describe configured storage media, and help describe the technical effects and operation of systems and manufactures like those discussed in connection with other Figures. It does not follow that any limitations from one embodiment are necessarily read into another. In particular, processes are not necessarily limited to the data structures and arrangements presented while discussing systems or manufactures such as configured memories.

Those of skill will understand that implementation details may pertain to specific details, such as specific thresholds, topologies, system architectures, and specific operating environments, and thus need not appear in every embodiment. Those of skill will also understand that component identifiers and some other terminology used in discussing details are implementation-specific and thus need not pertain to every embodiment. Nonetheless, although they are not necessarily required to be present here, such details may help some readers by providing context and/or may illustrate a few of the many possible implementations of the technology discussed herein.

With due attention to the items provided herein, including technical processes, technical effects, technical mechanisms, and technical details which are illustrative but not comprehensive of all claimed or claimable embodiments, one of skill will understand that the present disclosure and the embodiments described herein are not directed to subject matter outside the technical arts, or to any idea of itself such as a principal or original cause or motive, or to a mere result per se, or to a mental process or mental steps, or to a business method or prevalent economic practice, or to a mere method of organizing human activities, or to a law of nature per se, or to a naturally occurring thing or process, or to a living thing or part of a living thing, or to a mathematical formula per se, or to isolated software per se, or to a merely conventional computer, or to anything wholly imperceptible or any abstract idea per se, or to insignificant post-solution activities, or to any method implemented entirely on an unspecified apparatus, or to any method that fails to produce results that are useful and concrete, or to any preemption of all fields of usage, or to any other subject matter which is ineligible for patent protection under the laws of the jurisdiction in which such protection is sought or is being licensed or enforced.

Reference herein to an embodiment having some feature X and reference elsewhere herein to an embodiment having some feature Y does not exclude from this disclosure embodiments which have both feature X and feature Y, unless such exclusion is expressly stated herein. All possible negative claim limitations are within the scope of this disclosure, in the sense that any feature which is stated to be part of an embodiment may also be expressly removed from inclusion in another embodiment, even if that specific exclusion is not given in any example herein. The term "embodiment" is merely used herein as a more convenient form of "process, system, article of manufacture, configured computer readable storage medium, and/or other example of the teachings herein as applied in a manner consistent with applicable law." Accordingly, a given "embodiment" may include any combination of features disclosed herein, provided the embodiment is consistent with at least one claim.

Not every item shown in the Figures need be present in every embodiment. Conversely, an embodiment may contain item(s) not shown expressly in the Figures. Although some possibilities are illustrated here in text and drawings by specific examples, embodiments may depart from these examples. For instance, specific technical effects or technical features of an example may be omitted, renamed, grouped differently, repeated, instantiated in hardware and/or software differently, or be a mix of effects or features appearing in two or more of the examples. Functionality shown at one location may also be provided at a different location in some embodiments; one of skill recognizes that functionality modules can be defined in various ways in a given implementation without necessarily omitting desired technical effects from the collection of interacting modules viewed as a whole. Distinct steps may be shown together in a single box in the Figures, due to space limitations or for convenience, but nonetheless be separately performable, e.g., one may be performed without the other in a given performance of a method.

Reference has been made to the figures throughout by reference numerals. Any apparent inconsistencies in the phrasing associated with a given reference numeral, in the figures or in the text, should be understood as simply broadening the scope of what is referenced by that numeral. Different instances of a given reference numeral may refer to different embodiments, even though the same reference numeral is used. Similarly, a given reference numeral may be used to refer to a verb, a noun, and/or to corresponding instances of each, e.g., a processor 110 may process 110 instructions by executing them.

As used herein, terms such as "a", "an", and "the" are inclusive of one or more of the indicated item or step. In particular, in the claims a reference to an item generally means at least one such item is present and a reference to a step means at least one instance of the step is performed. Similarly, "is" and other singular verb forms should be understood to encompass the possibility of "are" and other plural forms, when context permits, to avoid grammatical errors or misunderstandings.

Headings are for convenience only; information on a given topic may be found outside the section whose heading indicates that topic.

All claims and the abstract, as filed, are part of the specification. The abstract is provided for convenience and for compliance with patent office requirements; it is not a substitute for the claims and does not govern claim interpretation in the event of any apparent conflict with other parts of the specification. Similarly, the summary is provided for convenience and does not govern in the event of any conflict with the claims or with other parts of the specification. Claim interpretation shall be made in view of the specification as understood by one of skill in the art; it is not required to recite every nuance within the claims themselves as though no other disclosure was provided herein.

To the extent any term used herein implicates or otherwise refers to an industry standard, and to the extent that applicable law requires identification of a particular version of such a standard, this disclosure shall be understood to refer to the most recent version of that standard which has been published in at least draft form (final form takes precedence if more recent) as of the earliest priority date of the present disclosure under applicable patent law.

While exemplary embodiments have been shown in the drawings and described above, it will be apparent to those of ordinary skill in the art that numerous modifications can be made without departing from the principles and concepts set forth in the claims, and that such modifications need not encompass an entire abstract concept. Although the subject matter is described in language specific to structural features and/or procedural acts, it is to be understood that the subject matter defined in the appended claims is not necessarily limited to the specific technical features or acts described above the claims. It is not necessary for every means or aspect or technical effect identified in a given definition or example to be present or to be utilized in every embodiment. Rather, the specific features and acts and effects described are disclosed as examples for consideration when implementing the claims.

All changes which fall short of enveloping an entire abstract idea but come within the meaning and range of equivalency of the claims are to be embraced within their scope to the full extent permitted by law.

## Claims

1. A method (900) performed by a computing system (202) which includes multiple contexts (130), each context comprising a specification (132) of at least one of: a hardware device (101), a particular user account (404), a particular group (402) of user accounts, a computational service (406), an application program (408), a location (410), a virtual machine (420), or a container (416) which is a software virtualization mechanism (414), and wherein the method comprises:
forming (206) a string (220) from at least a first context-specific identifier (136) and a second context-specific identifier (136), the first context-specific identifier specific to a first context of the multiple contexts, the second context-specific identifier specific to a second context of the multiple contexts, the second context including a different context than the first context;
computing (302) a cryptographic hash (212) of the string by applying a cryptographic hash procedure (214) to the string, the cryptographic hash comprising a first portion (216) and a second portion (216);
utilizing (224) the first portion of the cryptographic hash as a first regenerable item (222); and
utilizing (224) the second portion of the cryptographic hash as a second regenerable item (222);
wherein an item X is regenerable when a computer-implementable regeneration method (604) exists which upon execution regenerates (704) X in the absence of any copy of X.

2. The method of claim 1, further comprising regenerating (704) the first regenerable item (222) in the absence (610) of any copy (608) of the first regenerable item as opposed to retrieving (902) a previously generated (802) copy (608) of the first regenerable item, the regenerating comprising re-applying (302) the cryptographic hash procedure (214).

3. The method of claim 1 or claim 2, wherein each of the first context-specific identifier (136) and the second context-specific identifier (136) is free of random content (506), pseudo-random content (504), and any other nondeterministic content (502).

4. The method of any of claims 1 to 3, wherein each of the first context-specific identifier (136) and the second context-specific identifier (136) is free of timestamp content (508), date content (518), event counter content (510), sequence number content (512), and any other time-dependent content (514).

5. The method of any of claims 1 to 4, further comprising conforming (306) the cryptographic hash (212) to a specification of a name-based universally unique identifier by altering (906) at least one bit of the computed cryptographic hash.

6. The method of any of claims 1 to 5, wherein the method computes a cryptographic hash comprising at least three portions (216) and utilizes (224) the at least three portions as respective regenerable items (222), and wherein each of the regenerable items is at least sixteen bytes long.

7. The method of any of claims 1 to 6, wherein the first regenerable item (222) and the second regenerable item (222) are each at least sixteen bytes long, the cryptographic hash procedure has a collision probability (614) no greater than SHA-256 collision probability, and the method further comprises satisfying (908) at least one of:
the utilizing utilizes (224) the first regenerable item as a symmetric encryption key (310);
the first context includes a specification of a hardware device (101), and the utilizing utilizes (224) the first regenerable item as a key (310) which is specific to the hardware device;
the first context includes a specification of a particular user account (404), and the utilizing utilizes the first regenerable item as a key (310) which is specific to the particular user account;
the first context includes a specification of a particular group (402) of user accounts, and the utilizing utilizes (224) the first regenerable item as a key (310) which is specific to the particular group of user accounts;
the first context includes a specification of a geographic location (410), and the utilizing utilizes (224) the first regenerable item as a key (310) which is specific to the geographic location; or
the computing system includes a context comprising a specification of a time (418), the first context includes a specification of a time period (418), and the utilizing utilizes (224) the first regenerable item as a key (310) which is specific to the time period.

8. A computing system (202), comprising:
a digital memory (112);
a processor (110) in operable communication with the digital memory;
a combination procedure (208) comprising instructions (116) which upon execution by the processor form (206) a string (220) by combining a first context-specific identifier (136) with a second context-specific identifier (136) which is from a different context (130) than the first context-specific identifier;
a cryptographic hash procedure (214) comprising instructions (116) which upon execution by the processor compute (302) a cryptographic hash (212) of the string, the cryptographic hash procedure having a collision probability (614) no greater than SHA-256 collision probability;
a portioning procedure (218) comprising instructions (116) which upon execution by the processor designate (304) a first portion (216) of the cryptographic hash as a first regenerable item (222) and designate (304) a second portion (216) of the cryptographic hash as a second regenerable item (222); and
an interface (228) to a regenerable item utilization procedure (226).

9. The computing system of claim 8, further comprising the regenerable item utilization procedure (226), wherein the regenerable item utilization procedure comprises instructions (116) which upon execution by the processor perform at least one of the following with at least one of the regenerable items: forensic analysis (312), intrusion detection (314), anomaly detection (314), encryption (624), decryption (624), computing system event auditing (316), computing system data auditing (316), or data tracking continuity (626).

10. The computing system of claim 8 or claim 9, wherein the combination procedure comprises instructions which upon execution by the processor perform at least one of:
concatenate (910) the first context-specific identifier with the second context-specific identifier; or
interleave (912) the first context-specific identifier with the second context-specific identifier.

11. The computing system of any of claims 8 to 10, wherein the cryptographic hash procedure (214) comprises instructions which upon execution by the processor perform an unbroken (622) cryptographic hash algorithm.

12. The computing system of any of claims 8 to 11, further comprising instructions which upon execution by the processor check (914) whether particular identifiers are from a same context (130) as each other.

13. A computer-readable storage medium (114) configured with data (118) and instructions (116) which upon execution by a processor (110) of a computing system (202) perform a method (900), the method comprising:
obtaining (230) a first context-specific identifier (136) which is specific to a first context (130);
obtaining (230) a second context-specific identifier (136) which is specific to a second context (130), the second context being different than the first context, each context comprising a specification of at least one of: a hardware device (101), a particular user account (404), a particular group (402) of user accounts, a computational service (406), an application program (408), a location (410), a time (418), a virtual machine (420), or a container (416) which is a software virtualization mechanism (414);
forming (206) a string (220) from at least the first context-specific identifier and the second context-specific identifier;
computing (302) a cryptographic hash (212) of the string, the cryptographic hash comprising a first portion (216) and a second portion (216);
utilizing (224) at least one of the first portion and the second portion as a key (310) or as an identifier (136) or both; and
regenerating (704) the cryptographic hash in the absence of any copy of the first portion and the absence of any copy of the second portion, the regenerating comprising recomputing (302) the cryptographic hash, the absence of a particular portion being absence (610) of the particular portion from the computing system during the regenerating until the recomputing recomputes the particular portion.

14. The computer-readable storage medium of claim 13, wherein an intervening event (616) occurs (702) in an environment (100) that contains or communicates with the computing system (202), the intervening event occurs between computing (302) the cryptographic hash and regenerating (704) the cryptographic hash, and the intervening event corrupts (916) or deletes (918) or encrypts (920) at least one of: the first portion (216), or the second portion (216).

15. The computer-readable storage medium of claim 13 or claim 14, wherein the utilizing (224) comprises writing (932) at least one of the first portion and the second portion in a golden image (606), or reading (930) at least one of the first portion and the second portion from a golden image, or both.
